# EUROPÄISCHE PATENTSCHRIFT

(11) **EP 1 722 968 B1**
(45) Veröffentlichungstag und Bekanntmachung des Hinweises auf die Patenterteilung: **27.07.2016**
(21) Anmeldenummer: 05715732.3
(22) Anmeldetag: 04.03.2005
(51) Int. Cl.: B32B 7/12, C09J 7/04, B32B 25/20, B32B 25/12, B32B 25/14, B32B 25/10

(54) **HOCH ABRIEBFESTES BAND FÜR DIE BANDAGIERUNG VON KABELBÄUMEN IN AUTOMOBILEN**
HIGHLY ABRASION-RESISTANT TAPE FOR BINDING CABLE TREES IN MOTOR VEHICLES
BANDE HAUTEMENT RESISTANTE A L'ABRASION POUR L'ENRUBANNAGE DE FAISCEAUX DE CABLES DANS DES AUTOMOBILES

(30) Priorität: 04.03.2004 DE 102004011223
(43) Veröffentlichungstag der Anmeldung: 22.11.2006
(73) Patentinhaber: tesa SE, 22848 Norderstedt (DE)
(72) Erfinder: KÜLPER, Klaus, 25421 Pinneberg (DE); SAMSON-HIMMELSTJERNA, Mathias Von, 30161 Hannover (DE); SCHMIDLIN, Andreas, DE-21720 Guderhanviertel (DE)
(86) Internationale Anmeldenummer: PCT/EP2005/002300
(87) Internationale Veröffentlichungsnummer: WO 2005/084944

(56) Entgegenhaltungen:
- EP-A- 1 258 346
- WO-A-02/14446
- DE-A1- 10 042 732

## Beschreibung

Die Erfindung bezieht sich auf ein hoch abriebfestes Band, das insbesondere für die Bandagierung von Kabelbäumen in Automobilen Verwendung finden kann.

In vielen Industriebereichen werden Bündel aus einer Vielzahl von elektrischen Leitungen vor dem Einbau oder in bereits montiertem Zustand umwickelt, um den Raumbedarf des Leitungsbündels durch Bandagieren zu reduzieren sowie zusätzlich Schutzfunktionen zu erzielen. Mit Folienklebebändern wird ein gewisser Schutz vor Flüssigkeitszutritt erreicht, mit luftigen und voluminösen Klebebändern auf Basis von dicken Vliesstoffen oder Schaumstoffen als Träger erhält man dämpfende Eigenschaften, bei Verwendung von abriebfesten, stabilen Trägermaterialien wird eine Schutzfunktion gegen. Scheuern und Reiben erzielt.

Besonders die Schutzfunktion gegenüber Scheuern, Reiben, Schleifen an scharfen Kanten und Graten etc., hier zusammengefasst unter dem Begriff der Abriebfestigkeit, nimmt an Bedeutung zu. Die durch Produktionsprozesse bedingten scharfen Kanten, Grate, Schweißstellen etc. werden immer weniger durch aufwendige Nacharbeit entschärft, da dieses einen zusätzlichen Arbeitsgang und Mehrkosten bedeutet. Dies gilt insbesondere bei den Rohkarossen in der Automobilindustrie, aber auch in anderen Bereichen wie zum Beispiel bei Waschmaschinen, vibrierenden Maschinen wie Kompressoren und dergleichen. Kabelstränge, die in solchen Bereichen verlaufen und die durch Vibration, Relativbewegungen und ähnlichem an derartigen, scharfen Stellen scheuern, sind daher potenziell gefährdet, dass die Schutzhülle zerstört wird. Diese Schutzhülle kann die zusätzliche Wickelbandage sein, aber auch die Isolierung um das Kupferkabel selber. In diesem Falle wäre ein Kurzschluss mit vollständigem Funktionsausfall und Zerstörung von elektrischen/elektronischen Bauteilen bis hin zum Brandereignis die Folge mit den daraus resultierenden Risiken an Sach- und Personenschäden.

Um derartige Gefährdungspotenziale zu minimieren, werden an kritischen Stellen die Kabelstränge nicht nur mit normalen Wickelbändern bandagiert, sondern es wird zusätzliche Vorsorge getroffen. Entweder werden Spezialklebebänder verwendet oder aber es kommen besondere Schutzkomponenten zum Einsatz. Dies können beispielsweise Kabelkanäle aus verschleißfesten Polymeren wie Polyamid oder Rillrohre oder Geflechtschläuche aus Polyester oder Polyamid sein, alles Komponenten, die in Hinblick auf Kosten, gesonderte Logistik und die aufwendige Handhabung bei der Montage ungünstig sind. Bei der Montage von Rillrohren und Kabelkanälen muss beispielsweise erheblicher Aufwand für die Anbringung der länglichen Rohrsystem und ihre sichere Fixierung auf dem Kabelbündel beziehungsweise an der Karosse betrieben werden, um ein Verrutschen zu verhindern. Auch sind gegebenenfalls gesonderte Maßnahmen notwendig für den Klapperschutz, da die Leitungen in den Rohrsystemen selten formschlüssig anliegen und deshalb mit den harten Materialien der Rohre bei Vibrationen Klappergeräusche erzeugen.

Auch Spezialklebebänder werden in Bereichen mit erhöhtem Abrieb- und Scheuerschutz eingesetzt. Klebebänder für die Wickelung von Kabelsätzen oder ähnlichen langgestreckten Systemen mit zusätzlichen Funktionalitäten sind als Stand der Technik bekannt und werden teilweise auch kommerziell genutzt:
In EP 1 136 535 A1 wird unter anderem ein mehrschichtiges Klebeband mit schalldämpfender Wirkung, bestehend aus einem Velours und einer nicht-textilen Zwischenlage, beschrieben, wobei diese Zwischenlage eine Folie oder eine direkt aufgebrachte, nichtklebende Kunststoff- oder Schaumbeschichtung sein kann. Diese Zwischenschicht dient der Stabilisierung des Velours gegen Verzug und als Sperrschicht, um ein Eindringen der aufgerakelten Klebemasse in den Veloursträger zu verhindern. Der angestrebte Abriebschutz ist bei einem derartigen Klebeband gering und wird allein durch die Veloursdeckschicht und den nach außen weisenden Veloursschlingen erreicht.

Nur zur Schallisolierung dient das in DE 199 10 730 A1 beschriebene Klebeband aus einem Laminat, einer Schallisolationsschicht (Velours oder Schaumstoff) und einem Vlies, das unter Verwendung von Schmelzkleber, -pulver oder einem Transfer-fix hergestellt wird. Auf die Verwendung des sehr teuren Veloursträgers aus dem Polymerwerkstoffen Polyester oder Polyamid wird auch in anderen Anmeldungen zurückgegriffen, die Klebebänder mit ausgeprägter Klapperschutzfunktion beschreiben DE 299 16 616 U1 sowie DE 101 02 927 A1). In allen Fällen werden hochpreisige Klebebänder erhalten, die in Hinblick auf den Abriebschutz keine sehr hohen Anforderungen erfüllen.

Einen ähnlichen Aufbau wie EP 1 136 535 A1 weist DE 101 49 975 A1 auf. Hier wird ein Klebeband zum Schutz von Gegenständen gegen Abrieb und Klappern geschrieben, das einen Zweischichtaufbau aus einer textilen Schicht und einer aufkalandrierten Folie aufweist. Gewebe oder Vlies als textile Schicht und insbesondere PVC-Folien werden hier ohne Einsatz von Klebern durch Kalandern unter Druck und Temperatur fest und dauerhaft miteinander verbunden. Die textile Schicht ist dem zu schützenden Gegenstand abgewandt angeordnet.

WO 00/13894 A1 beschreibt eine Scheuerschutzvorrichtung als Kantenschutz für scharfkantige Bauteile wie Stahlblechkarosseriegrate, wobei der Scheuerschutz an derartigen Stellen umgreifend aufgeklebt wird. Der Scheuerschutz besteht aus einer textilen Trägerschicht (beispielsweise aus Velours oder einem Nadelvlies) und einer scheuerstellenseitig aufgebrachten Schutzfolie, bevorzugt aus thermoplastischem Polyurethanpolymer, sowie einer bauteilseitig aufgebrachten Klebschicht mit einer Trennpapierabdeckung. Textile Trägerschicht und Schutzfolie sind über eine dünne Verklebung miteinander verbunden, wobei der Klebstoff nur teilbereichsweise in Form eines wärmeaktivierbaren Klebevlieses, -pulvers oder -films aufgebracht wird. Dieser aufwändige Verbund wird mit Trennpapier abgedeckt, in geeigneten Zuschnitten eingesetzt und ist deshalb für die generelle Schutzumwicklung von Kabelbäumen ungeeignet. Mit der erfindungsgemäßen Schutzvorrichtung wird nicht der Kabeibaum aktiv geschützt, sondern bei Bedarf scharfkantige Teile der Umgebung lokal abgedeckt als eine Art passiver Kabeisatzschutz.

DE 100 42 732 A1 beschreibt ein Klebeband für die spiralförmige Umwicklung langgestreckter Güter wie beispielsweise Käbelsätze, wobei durch eine nicht vollflächige Streifenbeschichtung auf dem bevorzugt textilem Träger eine verringerte Haftung des Wickelbandes zu den Leistungen und damit eine verbesserte Beweglichkeit und Biegefähigkeit des gesamten Kabelsatzes erreicht wird. Derartige erfindungsgemäße Klebebänder bieten jedoch keinen besonderen Abriebschutz, sondern dienen allein der Flexibilisierung des Kabelsatzes.

Ein Klebeband mit einer Eigenschaftskombination aus Schallminderung und Schutz vor Reibbeanspruchungen wird in DE 101 13 425 A1 beschrieben. Auch bei der geforderten Flächenmasse des Vliesträgers mit vertikalen Polfalten von mehr als 200 g/m² werden nur Schutzwirkungen im mittleren Bereich für Dämpfung und insbesondere gegen Abrieb erhalten, wie es auch schon aus der EP 0 995 782 A1 sowie EP 0 995 783 A1 bekannt war. Ähnlich verhält es sich auch für DE 100 39 983 A1, wo in einer speziellen Ausführungsform ein textiler Verbund aus einem scheuerbeständigen Vlies und einem textilen Flächengebilde beschrieben wird, der ohne Verwendung eines Kaschierklebers oder ähnlichem nur durch Wasserstrahlverfestigung hergestellt wird. Während das textile Flächengebilde zusätzliche dämpfende oder armierende Eigenschaften in den Verbund einbringt, sind die Abriebfestigkeiten für das scheuerbeständige wasserstrahlverfestigten Grundvlies aus Stapelfasern bei einer Flächenmasse von maximal 200 g/m² eher als gering anzusehen. Nähere Belege und insbesondere konkrete Angaben zu Scheuerfestigkeiten fehlen bei allen oben genannten Schutzrechten.

Neben dem in der genannten Schrift erwähnten Nähvlies gibt es weitere Träger, die in Klebebändern zur Kabelbaumbandagierung eingesetzt werden.
Die DE 44 42 092 C1, beschreibt solch ein Klebeband auf Nähvliesbasis, das auf der Trägerrückseite beschichtet ist. Der DE 44 42 093 C1 liegt die Verwendung eines Vlieses als Träger für ein Klebeband zugrunde, das durch die Bildung von Maschen aus den Fasern des Vlieses verstärktes Querfaservlies entsteht, also ein dem Fachmann unter dem Namen Malivlies bekanntes Vlies. Die DE 44 42 507 C1 offenbart ein Klebeband zur Kabelbandagierung, jedoch basiert es auf so genannten Kunit- beziehungsweise Multiknitvliesen.

Einen extrem komplizierten und kostenträchtigen vielschichtigen Verbund offenbaren EP 0 886 357 A1 und EP 0 886 358 A1. Hier werden ein PET-Spinnvlies, ein PET-Gewirke sowie gegebenenfalls eine Filz- oder Schaumstofflage mit jeweils einer Kaschierschicht verklebt. Dieser an sich schon aufwändige Verbund aus bis zu fünf Lagen wird zusätzlich noch partiell mit den beiden notwendigen Komponenten eines Klettsystems und ein oder mehreren durch Schutzpapier abgedeckten Selbstklebestreifen versehen. Unter wirtschaftlichen Gesichtspunkten sind derartige Systeme mit hoher Abriebschutzfunktion nur an wenigen, ausgewählten Stellen, aber nicht als allgemeine Wickelbänder für Kabeisätze oder andere längsgestreckte Gegenstände vertretbar.

Ähnlich aufwändig wird als Schutzummantelung zum Eindämmen von Klappergeräuschen für Leitungssysteme in DE 298 23 462 U1 ein Wickelband mit einem Trägerverbund aus mindestens zwei textilen Schichten beschrieben, das zusätzlich eine hohe Abrieb- und Aufreibfestigkeit aufweisen soll. Die äußere Schicht besteht aus einem Kettenwirkwaren-Velours mit hochgerauhten Veloursschlingen, das teilbereichsweise mittels eines wärmeaktivierbaren Kaschierklebers bei einem Auftragsgewicht von 10 bis 30 g/m² mit einem Vlies, vorzugsweise einem Nadelvlies, verbunden ist. Mit ca. 1,5 bis 4 mm trägt die Ummantelung für viele Automobilanwendungen zu stark auf und kann an Engstellen deshalb nicht eingesetzt werden.

Zusammenfassend kann konstatiert werden, dass eine Vielzahl von Lösungsansätzen bekannt ist, bei denen bevorzugt das sehr kostspielige textile Trägermaterial Velours im Verbund mit mindestens einem weiteren textilen oder nicht-textilen Flächengebilde für den besonderen Abrieb- und/oder Klapperschutz zuständig ist (detailliert beschrieben in DE 298 23 462 U1). Der Trägerverbund wird entweder ohne Klebeschicht oder aber durch einen besonderen wärmeaktivierbaren Kaschierkleber, häufig in nur teilbereichsweiser Verwendung, erzeugt. Selbstklebemassen dienen nur dazu, um als separate Schicht aus diesem Trägerverbund ein Klebeband herzustellen. Derartige Klebebänder sind durch die Verwendung des Wirkwaren-Velours nicht nur sehr teuer, sondern durch die Schlingenstruktur so dick, dass derartige Spezialwickelbänder bei der normalen überlappenden Spiralwicklung oder bei der Längsummantelung wegen den zur Verfügung stehenden knappen Verbauräumen nicht eingesetzt werden können.

Aufgabe der Erfindung ist es, gegenüber dem Stand der Technik eine merkliche Verbesserung zu erzielen und ein Band bereitzustellen, welches die Möglichkeit zur Bandagierung von Einzelleitungen zu Kabelsätzen mit hohem Schutz gegen mechanische Schädigungen durch Scheuern und Reiben an scharfen Kanten, Graten, Schweißpunkten etc. kombiniert. Dieses Band vorzugsweise Klebeband soll sowohl für die Standardwickeltechniken mit überlappender oder offener Spiralwicklung um das Leitungsbündel geeignet sein als auch für die Längsapplikation mittels Applikatoren, wie sie beispielsweise in der EP 1 008 152 A1 beschrieben werden, oder in Form von speziellen Konfektioniervarianten, insbesondere gemäß DE 100 36 805 A1. Auch in der Sonderform mit nur streifenförmiger Kleberbeschichtung in Längsrichtung an den Rändern des Trägermaterial gemäß DE 100 42 732 A1 soll das erfindungsgemäße Trägermaterial zu neuartigen, hoch abriebfesten Kabelwickelbändern führen, die Bandagierungs- und Abriebschutzfunktion in dem bevorzugten Klebeband vereinigen.

Als Methode, die Abriebbeständigkeit von Schutzsystemen in der Fahrzeugelektrik zu bestimmen, hat sich die internationale Norm ISO 6722, Kapitel 9.3 "Scrape abrasion test" (Ausgabe April 2002), etabliert. Hier wird der Prüfling (zum Beispiel die isolierte Kupferleitung oder aber das auf einen Metalldorn geklebte Wickelband) mit einem dünnen Stahldraht unter definierten Hubgeometrien und Gewichtsbelastung beansprucht, bis die Schutzhülle durchgerieben ist und es über einen Kurzschluss zum Stoppen des mitlaufenden Zählwerkes kommt.

Sofern nicht anders angegeben, beziehen sich alle Angaben zur Abriebfestigkeit auf diese ISO 6722-Methode. Das Klebeband wird dazu einlagig in Längsrichtung auf einem Metalldorn von 10 mm Durchmesser geklebt, die Scheüerbewegung findet mittig auf dem Klebeband mit einer Gewichtsbelastung von 7 N statt. Als Reibkörper wird ein Stahldraht gemäß ISO 8458-2 von 0,45 mm Durchmesser verwendet. Als Maßzahl für die Abriebfestigkeit wird die Anzahl der Hübe bis zum Kurzschluss angegeben. In Fällen von sehr hohen Scheuerbeständigkeiten kann über Erhöhung der Auflagemasse eine Verkürzung der Messzeit und Reduzierung der Hubzahl erreicht werden. Hierbei hat sich ein Auflagegewicht von 10. N als günstig erwiesen.

Demgemäß betrifft die Erfindung ein hoch abriebfestes Band für die Bandagierung von Kabelbäumen, insbesondere in Automobilen, aus einem Träger mit einer ersten Deckschicht A und einer zweiten Deckschicht B, wobei
sich zwischen den Deckschichten A und B eine Zwischenschicht C befindet, die mit den Deckschichten A.und. B jeweils über deren gesamte Fläche fest verbunden ist, die Deckschichten A und B aus einem Gewebe bestehen,

die Zwischenschicht C aus einer visko-elastischen Klebemasse, bevorzugt Selbstklebemasse, oder einem beidseitig klebend ausgerüsteten Klebeband besteht.

In einer ersten vorteilhaften Ausführungsform der Erfindung sind die visko-elastische Klebemasse oder die Klebemassen für das beidseitig klebende Klebeband Selbstklebemassen auf Basis von Naturkautschuk, Synthesekautschuk, Polyacrylaten oder Silikonen.

Überraschenderweise zeigt sich, dass bei erfindungsgemäßer Herstellung eines mehrlagigen Systems die Abriebfestigkeit des Gesamtverbundes deutlich höher ausfällt als die Summe aus den Abriebfestigkeiten der Einzellagen, wodurch eine erhebliche Steigerung der Schutzwirkung gegen reibende und scheuernde Einwirkungen erzielt werden kann, ohne gesonderte Schutzmaßnahmen ergreifen zu müssen. Bei erfindungsgemäßem Aufbau des Bandes ist es möglich, eine Kombination aus den Bandagiermöglichkeiten eines normalen Wickelbandes mit dem Abriebschutz von Sondersystemen wie TwistTubes®, Geflechtschläuche, Wellrohren und ähnlichem herzustellen. Hierzu ist es notwendig, dass ein Verbundaufbau für das Trägermaterial gewählt wird, wie er im Folgenden beschrieben ist, wobei die genannten Ausführungen nur als beispielhaft anzusehen sind.

Vorzugsweise beträgt die Abriebfestigkeit des Trägers (gemessen nach ISO 6722, Kapitel 9.3 "Scrape abrasion resistance") zumindest 150 % der Summe der Abriebfestigkeiten der Einzellagen.

Es handelt sich um ein mehrlagiges System aus zwei gleichen oder unterschiedlichen Deckschichten A und B, die eine günstige Abriebfestigkeit aufweisen, wie sie Gewebe haben, und zumindest einer Zwischenschicht C, die zum einen für. den dauerhaften Verbund zwischen den Deckschichten A und B sorgt, aber auch derart gestaltet ist, dass sie Kräfte und Energien, die bei Reib- und Scheuerbewegungen auftreten, aufnehmen und "vernichten" kann. Diese spezielle Energievernichtung kann ein Weiterleiten der mechanischen Energie an andere Teile in dem Band oder dessen Umgebung oder aber die zumindest teilweise Umwandlung in Wärme oder ähnlichem bedeuten. Damit wird verhindert, dass die ursprüngliche, mechanische Energie die Deckschichten zerstört, indem sie in andere Energieformen umgewandelt oder aber an Stellen des Bandes weitergeleitet wird, an denen sie keine oder zumindest geringere Schädigungen anrichtet als unmittelbar an den Deckschichten. Damit wird die Funktionsfähigkeit des Bandes als Wickelband und Schutzhülle verlängert, so dass in vielen Fällen auf zusätzliche, kosten- und arbeitsintensive Schutzsysteme verzichtet werden kann.

Im Stand der Technik werden vielfach auch mehrlagige Verbundsysteme genutzt, bei denen die Zwischenschicht C nicht die oben genannte Funktionalität bewirkt, sondern nur die Verbindung zwischen zwei Lagen A und B herstellen soll. Es handelt sich bei den Zwischenschichten um typische Kaschier- und Laminierkleber, zum Beispiel als wärmeaktivierbare Klebvliese oder in ähnlichen Darreichungsformen. Diese Systeme sind dadurch gekennzeichnet, dass sie in möglichst geringe Grammagen/Dicken aufgetragen werden, um durch Adhäsion zu den beiden Lagen A und B einen dauerhaften und festen Kontakt herzustellen, ohne die Herstellkosten merklich zu erhöhen. Derartige wärmeaktivierbare Thermoplasten weisen nach Abkühlen keine selbstklebrigen Eigenschaften auf. Die Auftragsgewichte für derartige Kaschier- und Laminierkleber liegen im Normalfall im unteren Bereich der. Bandbreite von 10 bis 30 g/m², wobei bei Auftragsgewichten im oberen Bereich derartige Verbunde brettig und eventuell zu steif für ein Wickelband werden können. Vielfach wird bewusst oder zwangsläufig bedingt durch die Wahl der Kaschierklebertechnologie nur eine partielle Verbindungsbildung zwischen den Lagen erzielt.
Beispielhaft sei hier auf das Abriebschutzsystem aus einem Polyamid-Kettenvelour und einem Polyester-Nadelvlies gemäß VW-Normteilnummer N 908 809 hingewiesen, wobei der Trägerverbund durch ein nicht-selbstklebendes, wärmeaktivierbares Polyamid-Spinnfaservlies mit einer Flächenmasse von 17g/m² Zusammenlaminiert wird.

Dagegen ist die erfindungsgemäße Zwischenschicht C dadurch gekennzeichnet, dass sie eine erheblich größere Dicke und/oder Masse zwischen den Decklagen A und B aufweist und von dem verwendeten Material beziehungsweise dem Aufbau her in der Lage ist, von außen einwirkende Kräfte und Energien aus Reibung, Scheuern, Vibrationen etc. zu dissipieren oder umzuwandeln. Hier eignen sich insbesondere kautschukelastische als visko-elastische Schichten wie dicke Klebemasseschichten aus Natur- oder Synthesekautschuk oder Polyacrylaten. Generell sind visko-elastische Systeme, wie sie in Selbstklebemassen Verwendung finden, besonders geeignet für den Einsatz als eine derartige Zwischenschicht.

Auch an sich bereits mehrlagig aufgebaute Systeme sind als erfindungsgemäße. Zwischenschichten geeignet. Bekannte doppelseitige Klebebänder für beispielsweise die Teppichverlegung weisen neben einem innenliegenden bahnförmigen Stützträger dicke Klebemasseschichten zu beiden Außenseiten hin auf. Als Träger sind neben Folien, geschäumten Systemen, Vliesstoffen, Gewirken, parallelisierte Filamenten, insbesondere offene Gewebe geeignet. Als Klebemasse sind alle bekannten Systeme wie Acrylate, Silikone, Synthesekautschuke sowie insbesondere Naturkautschuk und daraus abgeleitete Rezeptierungen denkbar. Werden derartige doppelseitige Klebebänder wie beispielsweise das bekannte Teppichverlegeband tesafix® 4964 zwischen die Deckschichten A und B platziert, erhält man eine signifikante Steigerung der Abriebfestigkeit, die deutlich höher liegt als die Summe der Einzelschichten.

Werden für die Zwischenschicht C doppelseitige Klebebänder gewählt, die als Stützträger mittig zwischen den beiden äußeren Klebemasseschichten ein geschlossenes, dichtes Flächengebilde wie zum Beispiel eine flexible Folie haben, erhält das erfindungsgemäße, hoch abriebfeste Wickelband eine zusätzliche Eigenschaft, die in besonders gelagerten Fällen auch allein für sich vorteilhaft ist und zum Produkteinsatz führen kann. Insbesondere in Bereichen, in denen Leitungsstränge mit aggressiven Chemikalien in-Kontakt kommen können, würde eine Bandagierung oder Umhüllung mit einem derartigen Klebeband eine weitgehende Barrierewirkung gegen diese Chemikalien ergeben. Die Folie wirkt als Sperre beispielsweise gegen Betriebsmittel wie Benzin, Schmieröle, Frostschutzmittel und dergleichen im Motorraum von Kraftfahrzeugen. Dies ist vorteilhaft, da bekannterweise etliche dieser Betriebsmittel die innen liegenden Leitungsisolierungen schädigen können. Die geschlossene Barriereschicht kann. entweder als Trägerfolie über das doppelseitige Klebeband in die Zwischenschicht eingebracht werden oder aber separat bei dem Herstellprozess des Verbundträgers, indem die Zwischenschicht zweilagig aus derselben oder unterschiedlichen Klebemasseschichten hergestellt wird, wobei zwischen diese beiden Lagen eine geeignete Folie eingeschossen wird. Für die Folien können widerstandsfähige Polymere wie PVC, Polyethylen, Polypropylen, Polyester sowie andere Hochleistungskunststoffe verwendet werden, insbesondere weiche und flexible Folien in der Dicke von 5 bis 150 µm, insbesondere 15 bis 50 µm, eignen sich hierfür.

Ohne diese Angaben als scharfe Ausschlussgrenze anzusehen, sollte die gesamte Zwischenschicht C eine Dicke von 0,05 bis 2 mm aufweisen, wobei in Hinblick auf die faktische Obergrenze für die Dicke des Gesamtklebebandes für Bandagierungsänwendungen von langgestreckten Gütern wie beispielsweise Kabelsträngen, die im Normalfall etwa bei 1 bis 1,5 mm liegt, sich Zwischenlagendicken von 0,05 bis 1,0 mm anbieten.

Für eine erfindungsgemäße Verbesserung der Abriebfestigkeit sind Flächenmassen für die Zwischenschicht C von 40 bis 600 g/m², insbesonders von 50 bis 300 g/m², geeignet.

Derartige erfindungsgemäße Trägerverbunde zeichnen sich nicht nur durch sehr hohe Abrieb- und Scheuerfestigkeiten aus, sondern weisen auch Geräuschdämpfungseigenschaften auf, so dass sie je nach Einsatzgebiet nicht nur als Schutzsystem gegen mechanische Belastungen verwendet werden können, sondern auch als Klapperschutzband. Gerade bei Kabelbäumen in Maschinen oder Automobilen ist vielfach die Notwendigkeit von Abriebschutz unmittelbar mit Klapperschutzanforderungen kombiniert. Ein beweglicher Kabelstrang kann zum einen an scharfen Kanten und Graten scheuern, aber auch bei Vibrationen und Gegenschlagen Klappergeräusche erzeugen. Sind dann die für die Kabelbandagierung verwendeten Wickelbänder in der Lage, das Auftreten von Schallereignissen aktiv zu unterdrücken oder zu reduzieren, kann auf zusätzliche kostenträchtige geräuschdämpfende Maßnahmen verzichtet werden.
Die erfindungsgemäßen Trägerverbunde mit einer dicken Zwischenschicht aus viskoselastischer Klebemasse beziehungsweise einem doppelseitig klebenden Klebeband ergeben eine gewisse Schall- und Geräuschdämpfung, die verstärkt werden kann, indem in die Zwischenschicht C noch ein "luftiges" Flächengebilde wie beispielsweise ein Vlies, Gewirke, geschäumte Folie oder Schaumstoff integriert wird.

In einer weiteren vorteilhaften Ausführungsform der Erfindung wird der Träger zumindest einseitig mit einer Selbstklebemasse beschichtet.

Die Beschichtung erfolgt dabei auf die offene Seite der Deckschicht A oder die offene Seite der Deckschicht B.

Um aus dem Verbundträger ein Selbstklebeband herzustellen, kann auf alle bekannten Klebemassensysteme zurückgegriffen werden. Neben Natur- oder Synthesekautschuk basierten Klebemassen sind auch Silikonklebemassen sowie insbesondere Polyacrylatklebemassen verwendbar. Wegen ihrer besonderen Eignung als Klebemasse für Wickelbänder von automobilen Kabelsätzen in Hinblick auf die Foggingfreiheit sowie die hervorragende Verträglichkeit mit PVC- sowie PVC-freien Aderisolierungen sind lösungsmittelfreie Acrylat-Hotmeltmassen zu bevorzugen, wie sie in DE 198 07 752 A1 sowie in DE 100 11 788 A1 näher beschrieben sind. Die Auftragsgewichte bei der Klebemassenbeschichtung sind den jeweiligen Verbundsystemen in Hinblick auf die Rauhigkeit sowie Saugfähigkeit der zu beschichtenden Oberfläche anzupassen und bewegen sich im Bereich zwischen 40 bis 100 g/m² für glatte, nicht-saugende Deckschichten oder aber bis 300 g/m² für offene, strukturierte Deckschichten, wobei 50 bis 150 g/m² im Normalfall als ausreichend anzusehen sind. Als Beschichtungstechnologie für derartige Trägermaterialien kann auf bekannte Systeme zurückgegriffen werden, wobei sich für offene, saugfähige Textilien Verfahren anbieten, die ein druckloses Auflegen von hochviskosen Klebemassen zulassen, beispielsweise die Beschichtung von Hotmelt-Klebemassen über Düsenbeschichtung oder über Transferierung von einem anti-adhäsiven Trägertuch oder Releaseliner auf den Trägerverbund.

Eine vorteilhafte Form eines erfindungsgemäßen Trägerverbundes lässt sich aus zwei Deckschichten und einer dicken, visko-elastischen Zwischenschicht dergestalt herstellen, dass zwei identische oder unterschiedliche, einseitig mit Klebemasse beschichtete Trägermaterialien versetzt oder in unterschiedlichen Breiten mit den Klebemasseseiten gegeneinander zusammenkaschiert werden, so dass an den Seitenrändern jeweils ein schmaler Streifen an Klebemasse offen und klebaktiv verbleibt. Derartige Konstruktionen sind bereits in DE 100 42 732 A1 oder DE 37 33 841 A1 beschrieben, jedoch nicht für die Verwendung in.hoch abriebfesten Klebebändern. Im einfachsten Fall kann somit auf zwei geeignete Standard-Klebebänder zurückgegriffen werden, die in oben erwähnter Konfiguration zusammengeführt werden und dadurch ein hoch abriebfestes Klebeband bilden, das insbesondere für die Längsummantelung von langgestreckten Gütern gemäß DE 100 36 805 A1 geeignet ist.

| | | |
|---|---|---|
| Träger | | |
| Klebemasse | | |
| | Klebemasse | |
| | Träger | |

Sollen die beiden Klebestreifen am Rand zu derselben Seite hin orientiert sein, ist des Weiteren ein leicht geänderter, einfacherer Aufbau möglich, der jedoch zu einer Verminderung in der Abriebschutzfunktion führt, da die visko-elastische Zwischenschicht in ihrer Mächtigkeit verringert wird. Welche von beiden Versionen zur Verwendung kommt, hängt im konkreten Fall von den wirtschaftlichen und technischen Anforderungen ab:

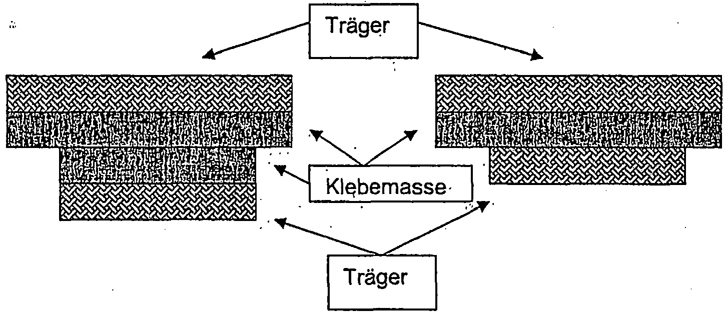

Der schmalere Trägerstreifen zum teilweisen Abdecken kann somit wie im obigen Fall ein Klebeband aus Träger und Selbstklebemasse sein oder aber auch nur ein Flächengebilde wie. eine Folie oder ein textiler Träger, wenn die Selbstklebeschicht des breiten Streifens bereits ausreichend dimensioniert ist.

Durch geeignete Auswahl der beiden Teilkomponenten, das heißt in diesem Falle der beiden Selbstklebebänder, lässt sich das Klebeband für Längsummantelungen in weiten Bereichen variieren. Über die verwendeten Art der Trägermaterialien sind Abrieb- und Temperaturbeständigkeiten, Dämpfungseigenschaften sowie Farbe und Erscheinungsform der äußeren Decklage wählbar. Durch die Art und Menge der jeweiligen Klebebandbeschichtung wird die erfindungsgemäße Zwischenschicht erzielt.

Weiterhin umfasst somit der Erfindungsgedanke auch ein langgestrecktes Gut, wie insbesondere einen Kabelbaum, ummantelt mit einem erfindungsgemäßen Klebeband sowie ein Fahrzeug, enthaltend das ummantelte langgestreckte Gut.

Als Decklagen sind grundsätzlich Gewebe möglich, die eine geeignete Scheuerfestigkeit und Oberfläche bieten, dass sie für derartige Anwendungen im Automobilbereich in Frage kommen. Als besonders geeignet haben sich dicht gewebte Filamentgewebe aus Polyester oder Polyamid, aber auch aus Glasfasern oder Hochleistungskunststoffen wie Carbonfasern erwiesen mit einer Gewebekonstruktion von 40 bis 50 Fäden pro cm in Kettrichtung sowie 20 bis 30 Fäden pro cm in Schussrichtung. Derartige PET-Gewebe mit einem Flächengewicht von 70 bis 150 g/m² werden bereits seit längerem im Motorraum in Wickelbändern eingesetzt, sind temperatur- und alterungsbeständig und weisen bekanntermaßen eine mittlere Abriebfestigkeit von ca. 300 bis 1000 Hübe gemäß ISO 6722 (Dorndurchmesser 10 mm, 10 N Auflagegewicht, 0,45 mm dicker Stahldraht) auf (siehe Tabelle 1):

**Tabelle 1**

| Klebebandtyp | Abriebfestigkeit | |
|---|---|---|
| PET-Gewebe (130 g/m²) mit Kautschukmasse | 500 | bis 1.000 Hübe |
| PET-Nähvlies (80 g/m²) mit Kautschukmasse | 20 | bis 100 Hübe |
| PVC-Folie 0,1 mm mit Kautschukmasse | 1 | bis 50 Hübe |
| Twist Tube = PET-Geflechtschlauch (ohne Klebemasse) | 2000 | bis 5.000 Hübe |

Geht man in erster Nährung davon aus, dass sich bei Verwendung eines derartigen Filamentgewebes in doppelter Lage mit 5 bis 30 g/m² eines (partiell aufgebrachten) Kaschierklebers dazwischen die Abriebfestigkeit verdoppelt, so ist der Effekt bei Verwendung einer Zwischenlage von 50 g/m² und mehr und einer geeigneten viskoelastischen Klebemassenschicht, beispielsweise eines UV-vernetzten Hotmelt-Acrylatklebers oder einer Naturkautschukklebemasse, überraschend positiv.

Die Abriebfestigkeit eines derartigen Verbundsystems ist deutlich höher als die Summe der Decklagen (Tabelle 2).

**Tabelle 2**

| | Aufbau des Trägerverbunde aus je 2 PET-Filamentgeweben (125 g/m²) und als Zwischenschicht C | Abriebfestigkeit (7 N Auflagegewicht) |
|---|---|---|
| 1 | ohne | 5.130 Hübe |
| 2 | 30 g/m² Kaschierkleber | 5.310 Hübe |
| 3 | 120 g/m² Acrylat-Hotmeltklebemasse | 12.000 Hübe |
| 4 | 260 g/m² Naturkautschukklebemasse | > 20.000 Hübe |

Für die Messung der Variante 1 werden zwei Lagen des oben beschriebenen PET-Filamentgewebes mechanisch auf der Abriebmessapparatur fixiert und ohne zusätzlichen Kaschierkleber vermessen. Die Verwendung des Kaschierklebers bei der Version B ergibt keine signifikante Erhöhung der Abriebfestigkeit gegenüber der kleberfreien Basisversion 1.
Erst bei Einsatz einer erfiridungsgemäßen Zwischenschicht - in diesem Beispiel 120 g/m² einer UV-vernetzten Acrylatklebemasse - steigen die Abriebwerte um mehr als 100% an. Ein derartiger Aufbau wie in der Variante 3 lässt sich technisch ohne großen Aufwand realisieren durch das Zusammenkaschieren von zwei einseitig klebenden Gewebebändern aus jeweils einem PET-Gewebeträger mit 60 g/m² Klebemassenauftrag. Als Ergebnis wird der erfindungsgemäße Trägerverbund aus den beiden Gewebe-Deckschichten und 2 x 60 g/m² = 120 g/m² Klebemasse als Zwischenschicht dazwischen erhalten. Das einseitig beschichtete PET-Gewebeband mit 60 g/m² Acrylatklebemasse weist eine Abriebfestigkeit von 1.800 Hüben, für den Trägerverbund gemäß Variante 3 wäre somit ein Abriebwert von 3.600 Hüben zu erwarten gewesen. Real kann die Abriebfestigkeit jedoch um mehr als 300 % gesteigert werden.

In der Variante 4 wird als Zwischenschicht ein kommerziell erhältliches doppelseitig klebendes Teppichverlegeband (tesafix ® 4964) verwendet, bestehend aus ca. 250 g/m² einer harzmodifizierten Naturkautschukklebemasse und einem 110 g/m² Zellwollgewebe als mittiges Trägermaterial. Das doppelseitige Klebeband ergibt bei der Abriebmessung nur einen Wert von ca. 500 Hüben, in der Funktion der Zwischenschicht für die beiden PET-Gewebe-Deckschichten wurde die Abriebmessung an der Variante 4 nach 20.000 Hüben abgebrochen, ohne dass der Trägerverbund bereits durchgescheuert war. Auch in dieser Kombination ist die Scheuerfestigkeit um mehr als 300 % gegenüber der Summe der Einzelwerte verbessert.

Noch stärker fällt der absolute Zugewinn an Abriebfestigkeit aus, wenn zwischen den beiden Decklagen aus dem PET-Gewebe zusätzlich noch ein geeigneter weitere Träger in die Zwischenschicht eingebaut ist.
Dies können Folien, geschäumte Folien, Schaumstoffen und insbesondere textile Träger sein. Mit der Variante 3 aus Tabelle 2 als Basis lassen sich weitere hochabriebfeste Trägerverbunde herstellen, wenn mittig in die Zwischenschicht aus 120 g/m² Selbstklebemasse ein textiler Träger eingelegt wird.
Technisch kann auch diese Variante äußerst einfach realisiert werden, indem zwischen zwei Lagen aus dem oben beschriebenen PET-Gewebeband mit 60 g/m² Selbstklebemasse der entsprechende textile Träger einkaschiert wird (Tabelle 3). Da die beiden Deckschichten bereits ausreichend mit Selbstklebmasse beschichtet sind, entfällt die Notwendigkeit für eine gesonderte Fixierung der textilen Lage. Die Selbstklebemasse erfüllt somit eine Doppelfunktion als abriebfördernden Zwischenschicht sowie als Fixierhilfe für das mittig darin eingebrachte Textil.

**Tabelle 3**

| | | | |
|---|---|---|---|
| Aufbau des Trägerverbundes aus 2 äußeren Decklagen eines PET-Gewebes (125 g/m²) und 60 g/m² Acrylatklebemasse und einem textilen Träger | | | Abriebfestigkeiten |

| | | 7 N | 10 N |
|---|---|---|---|
| | | Auflagegewicht | |
| 3 | ohne | 12.000 Hübe | 5.100 Hübe |
| 5 | PET-Stapelfaservlies, 60 g/m² | > 20.000 Hübe | -------- |
| 6 | PET-Filamentgewebe, 60 g/m² | > 20.000 Hübe | -------- |
| 7 | PA-Gewebe, 75 g/m² | 34.400 Hübe | |
| 8 | PET-Schlingenware, 230 g/m² | > 50.000 Hübe | |
| 9 | PET-Multiknit, 320 g/m² | -------- | > 23.000 Hübe |

Selbst an sich nicht abriebfeste Vliesstoffe wie beispielsweise ein wasserstrahlverfestigtes PET-Stapelfaservlies von 60 g/m² Flächengewicht, welches für sich allein bereits nach 140 Hüben durchgescheuert ist, verbessert die Abriebfestigkeit des Gesamtverbundes nach Variante 5 von 12.000 auf über 20.000 Hübe. Bei Verwendung an sich stabiler textiler Träger mittig im Trägerverbund (Varianten 7 bis 9 mit einer Schlingenware, einem Nylon-Gewebe beziehungsweise Multiknit-Vliesstoff) stößt die Abriebmessung mit 7 N Auflagegewicht bereits an ihre Grenzen. Eine Erhöhung der Scheuerbelastung durch 10 N Auflagegewicht ergibt aber auch für die Variante 9 bereits mehr als 23.000 Hübe. Damit bewegen sich derartige Verbunde in den Regionen, die für spezielle Abriebschutzkomponenten in Kabelsätzen wie Geflechtschläuchen, Rillrohren etc. gemessen werden und höchsten Schutz bieten. Insbesondere Textilien aus zähelastischen oder verschließfesten Werkstoffen wie beispielsweise Polyamid, Carbonfasern oder Glas führen zu weiteren Abriebschutzverbesserungen.

Aus den beispielhaften Trägerverbunden der Tabellen 2 und 3 wird deutlich, dass bei entsprechenden erfindungsgemäßem Aufbau des Trägermaterials sich sehr hohe Abrieb- und Scheuerfestigkeiten erzielen lassen, so dass aus derartigen Trägern hergestellte Klebebänder eine attraktive Kombination von Bandagier- und Wickelband mit integriertem Abriebschutz bieten. Vordergründig bieten sich derartige Klebebänder für die spiralförmige und Längsummantelung von elektrischen Leitungen zu Kabelsätzen an, wenn diese dauerhaft in scheuer- und vibrationsgefährdeten Bereichen eingesetzt werden. Aufgrund ihrer exzellenten Abriebschutzwirkung sind derartige Trägerverbunde jedoch generell als Schutzsysteme gegen scheuernde und reibende Beanspruchungen geeignet. Eine selbstklebende Ausrüstung zu einem Klebeband ist dabei nicht zwangsläufig notwendig, wenn die Positionierung und Fixierung an der zu schützenden Stelle anderweitig gelöst wird, beispielsweise durch einen genähten oder gekletteten Schlauch um ein langgestrecktes, zu schützendes Gut.

Die nachfolgend beschriebenen Beispiele lassen den Fachmann erkennen, wie derartige Verbundträger herzustellen sind.

### Beispiel 1

Als Deckschicht wird ein Polyesterfilamentgewebe von 125 9/m² Flächenmasse gewählt, welches 45 Fäden pro cm in Kettrichtung und 25 Fäden pro cm in Schussrichtung aufweist. Das Filament hat eine Stärke von 167 dtex. Als Höchstzugkraft werden 220 N/cm im Reißversuch bei einer Reißdehnung von 32 % in Kettrichtung gemessen. Dieses Polyestergewebe wird durch Transferierung von 60 g/m² einer UV-vernetzten Acrylathotmeltmasse (BASF acResin 258) von Trennpapier unter Druck und Temperatur auf den textilen Träger beschichtet zu einem einseitig klebenden Gewebeband.
a) für die Trägerverbundversion nach Variante 3 aus Tabelle 2 werden zwei Lagen aus diesem einseitig klebenden Gewebeband mit der Klebemasse . gegeneinander zusammenkaschiert. Ein selbstklebendes Wickelband lässt sich aus diesem nichtklebenden Trägerverbund durch Beschichtung mit ca. 100 g/m² derselben Acrylat-Hotmeltmasse erzeugen, wobei über das Ausmaß der UV-Vernetzung die für die spätere Anwendung wesentlichen klebtechnischen Eigenschaften wie Adhäsion, Kohäsion und Tack in weiten Bereichen ausgesteuert werden können.
b) wie in Beispiel 1 a), jedoch wird bei dem Zusammenkaschieren der beiden einseitig klebenden Decklagen zusätzlich als textiler Träger ein 0,25 mm dickes, wasserstrahlverfestigtes PET-Stapelfaservlies mit einer Flächenmasse von 60 g/m² zwischen die Klebemassenschichten einkaschiert.

Die Abriebwerte sind in den Tabellen 2 und 3 als Varianten 3 und 5 aufgeführt.

### Beispiel 2

Als Decklagen dient das in Beispiel 1 beschriebene PET-Filamentgewebe. Als viskoelastische Zwischenschicht wird das doppelseitige Klebeband tesafix ® 4964 aus einem Zellwoligewebe von ca. 110 g/m² und beidseitig jeweils ca. 120 bis 130 g/m² einer harzmodifizierten Naturkautschukklebemasse gewählt. Durch Zusammenkaschieren unter Druck entsteht ein hoch-abriebfester Verbundträger, der als Träger für Selbstklebebänder genutzt oder auch ohne Kleberbeschichtung als Abriebschütz verwendet werden kann (Variante 4 aus Tabelle 2).

### Gegenbeispiel

Dass die erfindungsgemäße Zwischenschicht den maßgeblichen Effekt an der Erhöhung der Abriebfestigkeit beiträgt, ist an dem folgenden Gegenbeispiel zu erkenne. Werden als Deckschichten die in Beispiel 1 beschriebenen PET-Filamentgewebe verwendet, aber zur Verbundbildung nur eine minimale Menge an einem wärmeaktivierbaren, thermoplastischen Kaschierkleber eingesetzt, ergeben sich für den Gesamtverbund Abriebwerte, die nur nahezu der Summe der beiden Deckschichten entsprechen (Variante 2 aus Tabelle 2). Ein zusätzlicher Schutz wird somit nicht erzielt.

## Patentansprüche

1. Hoch abriebfestes, wobei die Abriebfestigkeit des Trägers zumindest 150 % der Summe der Abriebfestigkeiten der Einzellagen, gemessen nach ISO 6722, Kapitel 9.3 "Scrape abrasion resistance", beträgt, Band für die Bandagierung von Kabelbäumen, insbesondere in Automobilen, aus einem Träger mit einer ersten Deckschicht A und einer zweiten Deckschicht B, wobei sich zwischen den Deckschichten A und B eine Zwischenschicht C befindet, die mit den Deckschichten A und B jeweils über deren gesamte Fläche fest verbunden ist,
die Deckschichten A und B aus einem Gewebe bestehen,
wobei das Gewebe ein Filamentgewebe aus Polyester, Polyamid, Glasfasern oder Hochleistungskunststoffen wie Carbonfasern ist und 40 bis 50 Fäden pro cm in Kettrichtung sowie 20 bis 30 Fäden pro cm in Schussrichtung aufweist,
die Zwischenschicht C aus einer visko-elastischen Klebemasse, bevorzugt Selbstklebemasse, oder einem beidseitig klebend ausgerüsteten Klebeband besteht.

2. Band nach Anspruch 1, **dadurch gekennzeichnet, dass**
die visko-elastische Klebemasse oder die Klebemassen für das beidseitig klebende Klebeband Selbstklebemassen auf Basis von Naturkautschuk, Synthesekautschuk, Polyacrylaten oder Silikonen sind.

3. Band nach den Ansprüchen 1 oder 2, **dadurch gekennzeichnet, dass** die Zwischenschicht C aufweist
ein Flächengewicht von 70 bis 600 g/m², insbesondere von 50 bis 300 g/m², und/oder eine Dicke von 50 bis 1000 µm.

4. Band nach zumindest einem der Ansprüche 1 bis 3, **dadurch gekennzeichnet, dass** die Zwischenschicht C ein beidseitig klebendes Klebeband ist mit einer Folie, Vlies, Papier oder Gewebe als Trägermaterial und mit einer beidseitig aufgetragenen viskoelastischen Klebemasseschicht von jeweils 40 bis 300 g/m², insbesondere 50 bis 150 g/m².

5. Band nach zumindest einem der vorherigen Ansprüche, **dadurch gekennzeichnet, dass** der Träger zumindest einseitig mit einer Selbstklebemasse beschichtet wird, wobei die Selbstklebemasse eine Kautschuk- oder Acrylat- oder Silikonklebemasse sein kann.

6. Verwendung eines Bands nach zumindest einem der vorherigen Ansprüche zum Ummanteln von langgestrecktem Gut, wie insbesondere Kabelsätzen, wobei das Band in einer schraubenförmigen Spirale um das langgestreckte Gut geführt wird.

7. Verwendung eines Bands nach zumindest einem der vorherigen Ansprüche zum Ummanteln von langgestrecktem Gut, wie insbesondere Kabelsätzen, wobei das langgestreckte Gut in axialer Richtung von dem Band umhüllt wird.

8. Langgestrecktes Gut, wie insbesondere ein Kabelsatz, ummantelt mit einem Band nach zumindest einem der vorherigen Ansprüche.

9. Fahrzeug, enthaltend langgestrecktes Gut nach Anspruch 8.

## Claims

1. Highly abrasion-resistant tape, wherein the abrasion resistance of the backing is at least 150% of the sum of the abrasion resistances of the individual plies, measured in accordance with ISO 6722, Section 9.3 "Scrape abrasion resistance", for bandaging cable harnesses, in particular in automobiles, comprising a backing having a first outer layer A and a second outer layer B, with an interlayer C located between and firmly connected, in each case over its entire surface, to the outer layers A and B,
the outer layers A and B being composed of a woven fabric,
wherein the woven fabric is a filament fabric of polyester, polyamide, glass fibers or high-performance plastics such as carbon fibers and has 40 to 50 threads per cm in the warp direction and 20 to 30 threads per cm in the fill direction,
the interlayer C being composed of a viscoelastic adhesive, preferably self-adhesive, or a double-sided adhesive tape.

2. Tape according to Claim 1, **characterized in that** the viscoelastic adhesive or the adhesives for the double-sided adhesive tape are self-adhesive compounds based on natural rubber, synthetic rubber, polyacrylates or silicones.

3. Tape according to Claims 1 and 2, **characterized in that** the interlayer C has a basis weight of 70 to 600 g/m², in particular of 50 to 300 g/m², and/or a thickness of 50 to 1000 µm.

4. Tape according to at least one of Claims 1 to 3, **characterized in that** the interlayer C is a double-sided adhesive tape with a film, web, paper or woven backing material and with a double-sidedly applied viscoelastic adhesive layer of in each case 40 to 300 g/m², in particular 50 to 150 g/m².

5. Tape according to at least one of the preceding claims, **characterized in that** the backing is coated on at least one side with a self-adhesive compound, it being possible for the self-adhesive compound to be a rubber or acrylate or silicone adhesive.

6. Use of a tape according to at least one of the preceding claims for wrapping elongate product, such as cable looms in particular, the tape being guided in a helical spiral around the elongate product.

7. Use of a tape according to at least one of the preceding claims for wrapping elongate product, such as cable looms in particular, the elongate product being sheathed by the tape in its axial direction.

8. Elongate product, such as a cable loom in particular, wrapped with a tape according to at least one of the preceding claims.

9. Vehicle comprising elongate product according to Claim 8.

## Revendications

1. Ruban hautement résistant à l'usure, la résistance à l'usure du support représentant au moins 150% de la somme des résistances à l'usure des différentes couches, mesurées selon la norme ISO 6722, chapitre 9.3 "Scrape abrasion résistance", pour enrubanner des faisceaux de câbles, en particulier dans les automobiles, constitué par un support pourvu d'une première couche de couverture A et d'une deuxième couche de couverture B, une couche intermédiaire C étant située entre les couches de couverture A et B et reliée solidement aux couches de couverture A et B à chaque fois sur toute leur surface, les couches de couverture A et B étant constituées par un tissu, le tissu étant un tissu de filaments de polyester, de polyamide, de fibres de verre ou de matériaux synthétiques haute performance tels que des fibres de carbone et présentant 40 à 50 fils par cm dans le sens de la chaîne ainsi que 20 à 30 fils par cm dans le sens de la trame, la couche intermédiaire C étant constituée par une masse adhésive viscoélastique, de préférence une masse autoadhésive, ou par un ruban adhésif apprêté de manière adhésive sur les deux faces.

2. Ruban selon la revendication 1, **caractérisé en ce que** la masse adhésive viscoélastique ou les masses adhésives pour le ruban adhésif double face sont des masses autoadhésives à base de caoutchouc naturel, de caoutchouc de synthèse, de polyacrylates ou de silicones.

3. Ruban selon les revendications 1 ou 2, **caractérisé en ce que** la couche intermédiaire C présente un poids surfacique de 70 à 600 g/m², en particulier de 50 à 300 g/m², et/ou une épaisseur de 50 à 1000 µm.

4. Ruban selon au moins l'une quelconque des revendications 1 à 3, **caractérisé en ce que** la couche intermédiaire C est un ruban adhésif double face, présentant une feuille, un non-tissé, un papier ou un tissu comme matériau support et une couche de masse adhésive viscoélastique, appliquée sur les deux faces, à chaque fois à 40 jusqu'à 300 g/m², en particulier à 50 jusqu'à 150 g/m².

5. Ruban selon au moins l'une quelconque des revendications précédentes, **caractérisé en ce que** le support est revêtu sur au moins une face par une masse autoadhésive, la masse autoadhésive pouvant être une masse adhésive à base de caoutchouc, d'acrylate ou de silicone.

6. Utilisation d'un ruban selon au moins l'une quelconque des revendications précédentes, pour enrubanner un produit allongé, tel qu'en particulier des câblages, le ruban étant guidé en une spirale hélicoïdale autour du produit allongé.

7. Utilisation d'un ruban selon au moins l'une quelconque des revendications précédentes pour enrubanner un produit allongé, tel qu'en particulier des câblages, le produit allongé étant enveloppé dans le sens axial par le ruban.

8. Produit allongé, tel qu'en particulier un câblage, enrubanné par un ruban selon au moins l'une quelconque des revendications précédentes.

9. Véhicule, contenant un produit allongé selon la revendication 8.
